# EUROPEAN PATENT APPLICATION

(11) **EP 4 808 020 A1**
(43) Date of publication of application: **16.09.2026**
(21) Application number: 25760843.0
(22) Date of filing: 21.02.2025
(51) Int. Cl.: H04J 3/16

(54) **COMMUNICATION METHOD AND RELATED DEVICE**

(30) Priority: 01.03.2024 CN 202410238924; 04.04.2024 CN 202410405156
(71) Applicant: Huawei Technologies Co., Ltd., Shenzhen, Guangdong 518129 (CN)
(72) Inventor: WU, Xuming, Shenzhen, Guangdong 518129 (CN); LIU, Dekun, Shenzhen, Guangdong 518129 (CN); ZHENG, Gang, Shenzhen, Guangdong 518129 (CN)
(74) Representative: Huawei European IPR
(86) International application number: PCT/CN2025/078415
(87) International publication number: WO 2025/180301

(57) **Abstract**

Embodiments of this application provide a communication method and related devices, to register an optical network terminal device with an optical network central office device when an optical transceiver option supported by the optical network terminal device matches an optical transceiver option supported by the optical network central office device, thereby improving reliability of sending an upstream optical signal by the optical network terminal device to the optical network central office device. The method includes: First, the optical network terminal device receives a downstream frame from the optical network central office device, where the downstream frame carries first indication information, and the first indication information indicates performance of a first optical transceiver included in the optical network central office device. Second, the optical network terminal device sends an upstream frame to the optical network central office device, where the upstream frame carries a device identifier of the optical network terminal device and second indication information, and the second indication information indicates a second optical transceiver option.

## Description

This application claims priority to Chinese Patent Application No. 202410238924.9, filed with the China National Intellectual Property Administration on March 1, 2024 and entitled "COMMUNICATION METHOD AND RELATED DEVICE". This application also claims priority to Chinese Patent Application No. 202410405156.1, filed with the China National Intellectual Property Administration on April 4, 2024 and entitled "COMMUNICATION METHOD AND RELATED DEVICE". These two patent applications are incorporated herein by reference in their entireties.

### TECHNICAL FIELD

This application relates to the field of optical communication technologies, and in particular, to a communication method and a related device.

### BACKGROUND

Broadband access technologies have developed rapidly in recent years, and passive optical networks (passive optical networks, PONs) have been widely popularized and rapidly expanded. As user data demands continuously and sharply increase, a 10 gigabit (G) PON has entered a stage of large-scale deployment, and next-generation PON system standards (for example, a 50G PON and higher-speed PON standards) are gradually being formulated and improved.

The PON specifically includes an optical network central office device and an optical network terminal device. The next-generation PON system standard may define a plurality of independent optical transceiver options for a same optical path loss class (ODN optical path loss class, ODN class), for example, specifically define an optical transceiver option N1 and an optical transceiver option N1b for an optical path loss class N1; for another example, specifically define an optical transceiver option C+ and an optical transceiver option C+b for an optical path loss class C+. Each optical transceiver option defines performance such as a launch power of an optical transceiver included in the optical network terminal device and receive sensitivity of an optical transceiver included in the optical network central office device.

However, in an existing solution, in a same optical path loss class, there is a case in which an optical transceiver option supported by an optical transceiver of the optical network central office device does not match an optical transceiver option supported by an optical transceiver of the optical network terminal device. This reduces reliability of transmitting an optical signal by the optical network terminal device to the optical network central office device.

### SUMMARY

Embodiments of this application provide a communication method and a related device, to register an optical network terminal device with an optical network central office device when an optical transceiver option supported by the optical network terminal device matches an optical transceiver option supported by the optical network central office device, thereby improving reliability of sending an upstream optical signal by the optical network terminal device to the optical network central office device.

According to a first aspect, an embodiment of this application provides a communication method. The method includes: First, an optical network terminal device receives a downstream frame from an optical network central office device, where the downstream frame carries first indication information, the first indication information indicates a first optical transceiver option, and the first optical transceiver option indicates performance of a first optical transceiver. Second, the optical network terminal device sends an upstream frame to the optical network central office device, where the upstream frame carries a device identifier of the optical network terminal device and second indication information, the second indication information indicates a second optical transceiver option, and the second optical transceiver option indicates performance of a second optical transceiver. Optionally, the upstream frame including the second indication information may be an upstream frame used by the optical network terminal device for registration. Based on the negotiation process between the optical network central office device and the optical network terminal device, the optical network central office device can obtain the second optical transceiver option of the optical network terminal device, and the optical network terminal device can also obtain the first optical transceiver option of the optical network central office device, facilitating operations and maintenance of an optical network.

According to this aspect, the optical network terminal device sends the upstream frame including the second indication information to the optical network central office device, to implement negotiation between the second optical transceiver option supported by the optical network terminal device and the first optical transceiver option supported by the optical network central office device, improving reliability of sending an upstream optical signal by the optical network terminal device to the optical network central office device.

According to the first aspect, in an optional implementation, the first optical transceiver option matches the second optical transceiver option. That the first optical transceiver option matches the second optical transceiver option may refer to any one of the following examples: Example 1: The first optical transceiver option is an optical transceiver option N1, and an optical transceiver option supported by the second optical transceiver is the optical transceiver option N1 and/or an optical transceiver option N1b. Example 2: The first optical transceiver option and the optical transceiver option supported by the second optical transceiver are both the optical transceiver option N1b. Example 3: The first optical transceiver option is an optical transceiver option C+, and the optical transceiver option supported by the second optical transceiver is the optical transceiver option C+ and/or an optical transceiver option C+b. Example 4: The first optical transceiver option and the optical transceiver option supported by the second optical transceiver are both the optical transceiver option C+b.

According to the first aspect, in an optional implementation, when the first optical transceiver option matches the second optical transceiver option, the upstream frame is sent to the optical network central office device.

According to this aspect, when determining that the second optical transceiver option supported by the optical network terminal device matches the first optical transceiver option supported by the optical network central office device, the optical network terminal device sends, to the optical network central office device, the upstream frame used for registration, to register the optical network terminal device with the optical network central office device, thereby improving reliability of sending an upstream optical signal by the optical network terminal device to the optical network central office device. For example, when the first optical transceiver option matches the second optical transceiver option, receive sensitivity (indicated by the first optical transceiver option) of the first optical transceiver is that an optical power (indicated by the second optical transceiver option) from the second optical transceiver can be successfully received. In this way, reliability of transmitting an upstream optical signal can be effectively ensured.

According to the first aspect, in an optional implementation, an optical transceiver option configured for the optical network terminal device is a fifth optical transceiver option, the first optical transceiver option does not match the fifth optical transceiver option, and after the optical network terminal device receives the downstream frame from the optical network central office device, the method further includes: The optical network terminal device changes the fifth optical transceiver option to the second optical transceiver option, where the first optical transceiver option matches the second optical transceiver option. In this implementation, if the first optical transceiver option does not match the fifth optical transceiver option configured for the second optical transceiver, the optical network terminal device changes the configured fifth optical transceiver option to the second optical transceiver option, to ensure that the performance of the first optical transceiver matches the performance of the second optical transceiver, improving reliability of transmitting an upstream optical signal.

According to the first aspect, in an optional implementation, the first optical transceiver option does not match the second optical transceiver option. In this implementation, if the first optical transceiver option does not match the second optical transceiver option, the optical network terminal device attempts to perform registration by sending the upstream frame, improving registration efficiency.

According to the first aspect, in an optional implementation, the upstream frame further carries information indicating that the first optical transceiver option does not match the second optical transceiver option. In this implementation, if the first optical transceiver option does not match the second optical transceiver option, the optical network terminal device sends, to the optical network central office device, the information indicating that the first optical transceiver option does not match the second optical transceiver option, to implement negotiation between the optical network central office device and the optical network terminal device on whether the optical transceiver options match.

According to the first aspect, in an optional implementation, that the first optical transceiver option matches the second optical transceiver option means that the first optical transceiver option is an optical transceiver option N1 and the second optical transceiver option is the optical transceiver option N1 and/or an optical transceiver option N1b, or the first optical transceiver option and the second optical transceiver option are both the optical transceiver option N1b. In this implementation, it is ensured that the first optical transceiver option matches the second optical transceiver option, to ensure that the performance of the first optical transceiver matches the performance of the second optical transceiver. In this way, during transmission of an upstream optical signal, reliability of transmitting the upstream optical signal can be effectively ensured, facilitating operations and maintenance of the optical network.

According to the first aspect, in an optional implementation, if the second optical transceiver option is the optical transceiver option N1, a mean launch power minimum to which the optical transceiver option N1 is mapped is 6.8 decibel-milliwatts (dBm), a mean launch power maximum to which the optical transceiver option N1 is mapped is 11.8 dBm, and a target parameter to which the optical transceiver option N1 is mapped is 4.47 dBm, where the target parameter is a launch optical power represented by OMA-TDEC (optical modulation amplitude, OMA, transmitter and dispersion eye closure, TDEC); or if the second optical transceiver option is the optical transceiver option N1b, a mean launch power minimum to which the optical transceiver option N1b is mapped is 7.8 dBm, a mean launch power maximum to which the optical transceiver option N1b is mapped is 11.8 dBm, and a target parameter to which the optical transceiver option N1b is mapped is 5.47 dBm. In this implementation, two different optical transceiver options (for example, the optical transceiver options N1 and N1b) can be obtained through division based on a same link budget parameter, and the second optical transceiver option is one of the two optical transceiver options, so that the optical network terminal device can be used in a complex optical network.

According to the first aspect, in an optional implementation, if the first optical transceiver option is the optical transceiver option N1, sensitivity at a bit error ratio reference level to which the optical transceiver option N1 is mapped is -22.7 dBm, optical modulation amplitude sensitivity at the bit error ratio reference level to which the optical transceiver option N1 is mapped is -22.53 dBm, and an overload at the bit error ratio reference level to which the optical transceiver option N1 is mapped is -2.2 dBm; or if the first optical transceiver option is the optical transceiver option N1b, sensitivity at the bit error ratio reference level to which the optical transceiver option N1b is mapped is -21.7 dBm, optical modulation amplitude sensitivity at the bit error ratio reference level to which the optical transceiver option N1b is mapped is -21.53 dBm, and an overload at the bit error ratio reference level to which the optical transceiver option N1b is mapped is -2.2 dBm. In this implementation, two different optical transceiver options (for example, the optical transceiver options N1 and N1b) can be obtained through division based on a same link budget parameter, and the first optical transceiver option is one of the two optical transceiver options, so that the optical network central office device can be used in a complex optical network.

According to the first aspect, in an optional implementation, that the first optical transceiver option matches the second optical transceiver option means that the first optical transceiver option is an optical transceiver option C+ and the second optical transceiver option is the optical transceiver option C+ and/or an optical transceiver option C+b, or the first optical transceiver option and the second optical transceiver option are both the optical transceiver option C+b. In this implementation, it is ensured that the first optical transceiver option matches the second optical transceiver option, to ensure that the performance of the first optical transceiver matches the performance of the second optical transceiver. In this way, during transmission of an upstream optical signal, reliability of transmitting the upstream optical signal can be effectively ensured, facilitating operations and maintenance of the optical network.

According to the first aspect, in an optional implementation, if the second optical transceiver option is the optical transceiver option C+, a mean launch power minimum to which the optical transceiver option C+ is mapped is 6.8 dBm, a mean launch power maximum to which the optical transceiver option C+ is mapped is 11.8 dBm, and a target parameter to which the optical transceiver option C+ is mapped is 4.47 dBm, where the target parameter is a launch optical power represented by OMA-TDEC; or if the second optical transceiver option is the optical transceiver option C+b, a mean launch power minimum to which the optical transceiver option C+b is mapped is 7.8 dBm, a mean launch power maximum to which the optical transceiver option C+b is mapped is 11.8 dBm, and a target parameter to which the optical transceiver option C+b is mapped is 5.47 dBm. In this implementation, two different optical transceiver options (for example, the optical transceiver options C+ and C+b) can be obtained through division based on a same link budget parameter, and the second optical transceiver option is one of the two optical transceiver options, so that the optical network terminal device can be used in a complex optical network.

According to the first aspect, in an optional implementation, if the first optical transceiver option is the optical transceiver option C+, sensitivity at a bit error ratio reference level to which the optical transceiver option C+ is mapped is -25.7 dBm, optical modulation amplitude sensitivity at the bit error ratio reference level to which the optical transceiver option C+ is mapped is -25.53 dBm, and an overload at the bit error ratio reference level to which the optical transceiver option C+ is mapped is -5.2 dBm; or if the first optical transceiver option is the optical transceiver option C+b, sensitivity at the bit error ratio reference level to which the optical transceiver option C+b is mapped is -24.7 dBm, optical modulation amplitude sensitivity at the bit error ratio reference level to which the optical transceiver option C+b is mapped is -24.53 dBm, and an overload at the bit error ratio reference level to which the optical transceiver option C+b is mapped is -5.2 dBm. In this implementation, two different optical transceiver options (for example, the optical transceiver options C+ and C+b) can be obtained through division based on a same link budget parameter, and the first optical transceiver option is one of the two optical transceiver options, so that the optical network central office device can be used in a complex optical network.

According to the first aspect, in an optional implementation, a serial number Serial_Number message included in the upstream frame is used to carry the second indication information; and if a value of the second indication information is a first value, the second indication information indicates that the second optical transceiver option is the optical transceiver option N1 or C+; or if the value of the second indication information is a second value, the second indication information indicates that the second optical transceiver option is the optical transceiver option N1b or C+b. In this implementation, the second optical transceiver option is indicated based on the Serial_Number message, so that it can be ensured that the second optical transceiver option is successfully indicated to the optical network central office device.

According to the first aspect, in an optional implementation, the second indication information is a 5^{th} bit or a 6^{th} bit in an order of a most significant bit to a least significant bit in a 40^{th} byte in the Serial_Number message, the first value is 0, and the second value is 1. The second optical transceiver option is indicated based on the Serial_Number message, so that it can be ensured that the second optical transceiver option is successfully indicated to the optical network central office device.

According to the first aspect, in an optional implementation, the second indication information further indicates a third optical transceiver option, the third optical transceiver option indicates the performance of the second optical transceiver, the second optical transceiver option is different from the third optical transceiver option, the second optical transceiver option and the third optical transceiver option correspond to a same optical path loss class, and after the optical network terminal device sends the upstream frame to the optical network central office device, the method further includes: The optical network terminal receives an activation message from the optical network central office device, where the activation message indicates one of the second optical transceiver option and the third optical transceiver option. In this implementation, the optical network central office device supports a plurality of optical transceiver options under a same link budget parameter, and the optical network terminal device also supports a plurality of optical transceiver options under a same link budget parameter. The optical network central office device may directly indicate, via the activation message, an optical transceiver option in which the optical network terminal device operates, so that the optical network terminal device can determine, among the plurality of supported optical transceiver options, the specific optical transceiver option based on which an upstream optical signal is to be transmitted, thereby ensuring reliability of transmitting the upstream optical signal, and improving efficiency of configuring, by the optical network central office device, an optical transceiver option in which the first optical transceiver operates and configuring, by the optical network terminal device, an optical transceiver option in which the second optical transceiver operates.

According to the first aspect, in an optional implementation, the activation message is an assign optical network terminal device identifier Assign ONU_ID message; the Assign ONU_ID message carries a target bit; the target bit is a 6^{th} bit in an order of a most significant bit to a least significant bit in a 15^{th} byte in the Assign ONU_ID message; and if a value of the target bit is 0, the target bit indicates that the optical transceiver option is N1 or C+; or if the value of the target bit is 1, the target bit indicates that the optical transceiver option is N1b or C+b.

According to the first aspect, in an optional implementation, the optical network terminal device is an optical network terminal ONT or an optical network unit ONU, and the optical network central office device is an optical line terminal OLT; or the optical network central office device is a primary device, and the optical network terminal device is a secondary device.

According to the first aspect, in an optional implementation, the device identifier of the optical network terminal device is a serial number.

According to a second aspect, an embodiment of this application provides a communication method. The method includes: An optical network central office device sends a downstream frame to an optical network terminal device, where the downstream frame carries first indication information, the first indication information indicates a first optical transceiver option, and the first optical transceiver option indicates performance of a first optical transceiver included in the optical network central office device; and the optical network central office device receives an upstream frame from the optical network terminal device, where the upstream frame carries a device identifier of the optical network terminal device and second indication information, the second indication information indicates a second optical transceiver option, and the second optical transceiver option indicates performance of a second optical transceiver included in the optical network terminal device. For descriptions of beneficial effects of this aspect, refer to the first aspect. Details are not described again.

According to the second aspect, in an optional implementation, the upstream frame carries the second indication information, and the second indication information indicates the second optical transceiver option.

According to the second aspect, in an optional implementation, an optical distribution network class (ODN class) field included in the downstream frame is used to carry the first indication information; and when a value of the first indication information is a third value, the first indication information indicates that the first optical transceiver option is N1; when the value of the first indication information is a fourth value, the first indication information indicates that the first optical transceiver option is N1b; when the value of the first indication information is a fifth value, the first indication information indicates that the first optical transceiver option is C+; or when the value of the first indication information is a sixth value, the first indication information indicates that the first optical transceiver option is C+b.

According to the second aspect, in an optional implementation, the third value is 000, the fourth value is 101, the fifth value is 100, and the sixth value is 110.

According to the second aspect, in an optional implementation, a configuration capability (burst profile) message included in the downstream frame is used to carry the first indication information; and the first indication information indicates that the first optical transceiver option is N1 or N1b, or the first indication information indicates that the first optical transceiver option is C+ or C+b.

According to the second aspect, in an optional implementation, when a value of the first indication information is 0, the first indication information indicates the optical transceiver option N1 or the optical transceiver option C+; or when the value of the first indication information is 1, the first indication information indicates the optical transceiver option N1b or the optical transceiver option C+b, where the first indication information is a 4^{th} bit in an order of a most significant bit to a least significant bit in a 5^{th} byte in the burst profile message, or the first indication information is a 5^{th} or 6^{th} bit in an order of a most significant bit to a least significant bit in a 6^{th} byte in the burst profile message.

According to the second aspect, in an optional implementation, the first indication information further indicates a fourth optical transceiver option, the fourth optical transceiver option indicates the performance of the first optical transceiver, the first optical transceiver option is different from the fourth optical transceiver option, and the first optical transceiver option and the fourth optical transceiver option correspond to a same optical path loss class.

According to the second aspect, in an optional implementation, the second indication information further indicates a third optical transceiver option, the third optical transceiver option indicates the performance of the second optical transceiver, the second optical transceiver option is different from the third optical transceiver option, the second optical transceiver option and the third optical transceiver option correspond to a same optical path loss class, and after the optical network central office device receives the upstream frame from the optical network terminal device, the method further includes: The optical network central office device sends an activation message to the optical network terminal device, where the activation message indicates one of the second optical transceiver option and the third optical transceiver option.

According to the second aspect, in an optional implementation, the activation message includes the second indication information; the activation message is an assign optical network terminal device identifier Assign ONU_ID message; the second indication information is a 6^{th} bit in an order of a most significant bit to a least significant bit in a 15^{th} byte in the Assign ONU_ID message; and if a value of the second indication information is 0, the second indication information indicates that the optical transceiver option is N1 or C+; or if the value of the second indication information is 1, the second indication information indicates that the optical transceiver option is N1b or C+b.

According to a third aspect, an embodiment of this application provides a communication apparatus, including a module configured to perform the method according to any one of the first aspect or a module configured to perform the method according to any one of the second aspect.

According to a fourth aspect, an embodiment of this application provides a chip. The chip includes a processor and a communication interface. The communication interface is configured to receive data and transmit the data to the processor or send data from the processor to another chip. The processor is configured to perform the method according to any one of the first aspect or the method according to any one of the second aspect.

According to a fifth aspect, an embodiment of this application provides a computer-readable storage medium. The computer-readable storage medium stores computer instructions. When the computer instructions are run on a computer, the method according to any one of the first aspect or the method according to any one of the second aspect is performed.

According to a sixth aspect, an embodiment of this application provides a communication apparatus, including an optical transceiver and a processor. The optical transceiver is configured to receive and transmit an optical signal, and the processor is configured to perform the method according to any one of the first aspect or the second aspect.

### BRIEF DESCRIPTION OF DRAWINGS

FIG. 1 is an example diagram of a structure of an optical network;
FIG. 2 is an example diagram of another structure of an optical network;
FIG. 3a is a step flowchart of a first embodiment of a communication method according to this application;
FIG. 3b is a step flowchart of a second embodiment of a communication method according to this application;
FIG. 4 is an example diagram of a frame structure of an embodiment of a downstream frame according to this application;
FIG. 5 is an example diagram of a frame structure of an embodiment of an upstream frame according to this application;
FIG. 6 is a step flowchart of a third embodiment of a communication method according to this application;
FIG. 7 is a block diagram of an embodiment of a communication apparatus according to this application;
FIG. 8 is a block diagram of another embodiment of a communication apparatus according to this application; and
FIG. 9 is a diagram of an embodiment of a chip system according to this application.

### DESCRIPTION OF EMBODIMENTS

The following describes technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

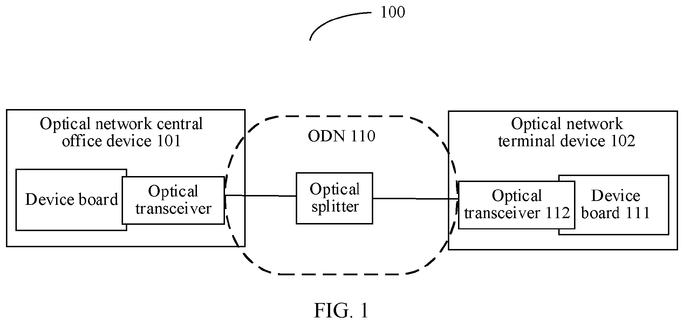

FIG. 1 is an example diagram of a structure of an optical network. An optical network registration method and a related device provided in embodiments of this application may be applied to a plurality of optical networks. For example, a type of the optical network 100 shown in this example is a passive optical network (passive optical network, PON). In this case, the optical network 100 includes an optical network central office device 101, an optical distribution network (optical distribution network, ODN) 110, and at least one optical network terminal device 102. The optical network central office device 101 is connected to the at least one optical network terminal device 102 through the ODN 110. A quantity of optical network terminal devices 102 included in the optical network is not limited in this example. The ODN 110 includes a passive optical splitter (Splitter), a feeder (Feeder) fiber connected between the optical network central office device 101 and the passive optical splitter, and a drop (Drop) fiber connected between the optical network terminal device 102 and the passive optical splitter. The optical network central office device 101 sends an optical signal to the optical network terminal device 102 through the ODN, which is referred to as a downstream. The optical network terminal device 102 sends an optical signal to the optical network central office device 101 through the ODN, which is referred to as an upstream. Specifically, when transmitting downstream data, the ODN 110 transmits the downstream data of the optical network central office device 101 to each optical network terminal device 102 via the optical splitter. When transmitting upstream data, the ODN 110 combines, through time division multiplexing (time division multiplexing, TDM), a plurality of pieces of upstream data from a plurality of optical network terminal devices 102 into one optical signal, and sends the optical signal to the optical network central office device 101. The optical network terminal devices 102 sequentially send the upstream data in a sequence specified by the optical network central office device 101, avoiding a conflict between the optical network terminal devices 102.

The optical network terminal device 102 shown in this example may be an optical network unit (optical network unit, ONU) or an optical network terminal (optical network terminal, ONT), and the optical network central office device 101 is an optical line terminal (optical line terminal, OLT). The optical network central office device 101 is connected to an upper-layer network-side device (for example, a switch or a router). The optical network terminal device 102 may be connected to a user-side device. For example, the optical network terminal device 102 provides an Ethernet user port or a plain old telephone service (plain old telephone service, POTS) user port, to connect to the user-side device. It should be noted that the type of the optical network shown in FIG. 1 is an optional example for description, and is not limited. For example, the optical network may be further used in an optical transport network (optical transport network, OTN), and in this case, both the optical network central office device 101 and the optical network terminal device 102 are OTN devices. If the optical network 100 is used in a wireless mesh network (Mesh), the optical network 100 is also referred to as a multi hop (multi hop) network. The mesh includes a plurality of transmission devices having mesh functions. The optical network central office device 101 and the optical network terminal device 102 are any two connected transmission devices of the plurality of transmission devices. The optical network 100 shown in this example may be further used in any one or a combination of a plurality of the following: a data center network (data center network, DCN), a metropolitan area network, an optical access network (optical access network, OAN), a metropolitan area network (metropolitan area network, MAN), a synchronous digital hierarchy (synchronous digital hierarchy, SDH), a gigabit-capable PON (Gigabit-capable PON, GPON), an Ethernet passive optical network (ethernet passive optical network, EPON), an evolved GPON (10-Gigabit-capable symmetric passive optical network, XGS-PON), an Ethernet (Ethernet), a flexible Ethernet (flex Ethernet, FlexE), a wavelength division multiplexing (wavelength division multiplexing, WDM) network, and the like. This is not specifically limited. For example, the method shown in this embodiment is applied to a 50G PON.

The optical network terminal device 102 is used as an example. A device type of the optical network terminal device 102 is not limited in this example. The device type of the optical network terminal device 102 may vary with application scenarios of the optical network. For example, the optical network terminal device 102 may be an optical transmission device, an optical access device, a router, a switch, a wireless base station, a wireless remote access device, a wireless baseband signal processing device, or the like, or may be a computing server (usually referred to as a server for short), a high performance computer (high performance computer, HPC), a storage server, a memory resource pool, or the like. The type of the optical network terminal device 102 is not limited in this example, provided that the optical network terminal device 102 has an electrical-to-optical conversion function and has an optical interface that can be connected to a fiber. For descriptions of a type of the optical network central office device 101, refer to the descriptions of the optical network terminal device 102. Details are not described again.

The optical network terminal device is used as an example. The optical network terminal device 102 includes a device board 111 and one or more optical transceivers 112. The optical transceiver may also be referred to as a photoelectric conversion module, an optical transceiver module, an optical module, or the like. A type and a packaging form of the optical transceiver are not limited in this example. The packaging form of the optical transceiver may be an optical transceiver board (optical transceiver board, OTB), a near package optics (near package optics, NPO), an on board optical module (on board optics, OBO) based on an optical input/output interface (optical input/output, OIO) technology, a co-package optical module (co-package optics, CPO), or the like. The optical transceiver in this application may be a component that integrates receiving and sending, or may be a component responsible only for receiving an optical signal, or may be a component responsible only for sending an optical signal. A quantity of device boards 111 included in the optical network terminal device 102 is not limited in this example. The device board 111 and the optical network terminal device 102 are integrated, or the device board 111 is an independent pluggable board. A quantity of optical transceivers 112 included in the optical network terminal device 102 is not limited in this example. The optical transceiver 112 may be integrated with the device board 111, may be plugged into the device board 111, or the like. This is not specifically limited. Specifically, a processor and a connector are packaged on the device board 111, and the connector is configured to connect the processor and the optical transceiver 112. The processor may be one or more chips or one or more integrated circuits. For another example, the processor may be one or more optical digital signal processors (optical digital signal processors, oDSPs), digital signal processors (digital signal processors, DSPs), field programmable gate arrays (field programmable gate arrays, FPGAs), application-specific integrated circuits (application-specific integrated circuits, ASICs), systems on chips (systems on chips, SoCs), central processing units (central processing units, CPUs), network processors (network processors, NPs), microcontroller units (microcontroller units, MCUs), programmable logic devices (programmable logic devices, PLDs), network interface card chips, storage interface chips or other integrated chips, any combination of the foregoing chips or processing modules, or the like. Details are not described. The processor has a sending interface, and the sending interface is connected to the connector. The connector is configured to provide an electrical interface, and the electrical interface implements a pluggable electrical connection to the optical transceiver 112. The optical network central office device 101 includes a device board and one or more optical transceivers. For detailed descriptions, refer to the descriptions of the optical network terminal device 102. Details are not described again.

Fiber to the home (fiber to the home, FTTH) is a transmission mode of fiber communication. An access network part in the foregoing optical network may implement wider coverage of the optical network through FTTH. In addition, same or similar communication transmission modes such as fiber to the office (fiber to the office, FTTO) and fiber to the building (fiber to the building, FTTB) are further proposed, and may also be application architectures of the method provided in this application. The example shown in FIG. 1 is described based on FTTH as an example.

Based on FTTH, to resolve a problem of wireless fidelity (wireless fidelity, Wi-Fi) coverage of a home network, a fiber may be further extended to a room of a resident. An optical terminal device that provides Wi-Fi access is installed inside the room, so that a distance between a user terminal and a Wi-Fi access point is reduced, and signal quality is improved. This application scenario is referred to as fiber to the room (fiber to the room, FTTR).

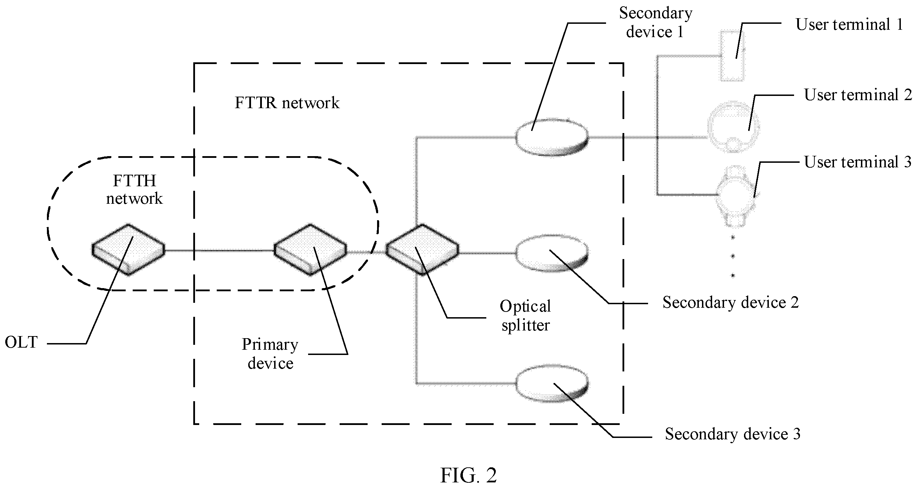

FIG. 2 is an example diagram of another structure of an optical network. Specifically, FIG. 2 is a diagram of an FTTR system architecture. An FTTR network and an FTTH network may be considered as cascaded PON systems. In FTTH, an OLT is deployed in a center office (center office, CO), and an ONU is deployed in an information box of a home. A primary device in FTTR may replace the ONU in FTTH. The primary device in an FTTR scenario has a function similar to that of the OLT in an FTTH scenario, and the primary device may also have a function similar to that of the ONU in the FTTH scenario. In other words, the primary device in FTTR is a device that has functions of both the OLT and the ONU, and may be used as a network device that serves as a connecting device between FTTH and FTTR. A secondary device in FTTR may be deployed in each room of the home, and is configured to connect to a user terminal (station). The secondary device and the ONU in FTTH are essentially similar network devices. In FTTR, the secondary device enters each room, and the secondary gateway may further have a function of an access point (Access Point, AP), and may directly perform a Wi-Fi connection to the user terminal. The user terminal may access the secondary device, and perform data transmission through the Wi-Fi connection established between the user terminal and the secondary device.

It should be understood that, a plurality of secondary devices may be deployed in FTTR, each secondary device is connected to a corresponding downstream port on the primary device, and the primary device may manage and configure all the secondary devices together. It should be noted that, the primary device may also be referred to as a "primary gateway", a "primary optical modem", a "primary FTTR device", or the like, and the secondary device may also be referred to as a "secondary gateway", a "secondary optical modem", a "secondary FTTR device", or the like. Specific names are not limited in this application. The optical network central office device shown in FIG. 1 may alternatively be the primary device in the FTTR architecture, and the optical network terminal device shown in FIG. 1 may alternatively be the secondary device in the FTTR architecture.

With reference to the architecture in FIG. 2, in some scenarios, when the secondary device in FTTR provides a service for the user terminal, a data transmission mode in which the user terminal accesses the secondary device may be different from a data transmission mode of a device in FTTH and FTTR. For example, communication in FTTH or FTTR is performed through a fiber, while the secondary device and the terminal may communicate with each other through a wireless network, and the wireless network may include but is not limited to Wi-Fi, near field communication (near field communication, NFC), infrared, Bluetooth, ZigBee, or the like.

It may be understood that FIG. 1 and FIG. 2 are merely diagrams. The optical network may further include other devices, for example, may further include a wavelength division device, an optical amplifier device, and more optical network terminal devices, which are not shown in FIG. 1 and FIG. 2.

The following describes, based on the foregoing architecture of the optical network, a method procedure provided in embodiments of this application. The following describes the method shown in embodiments of this application by using an example in which the optical network central office device is an OLT and the optical network terminal device is an ONU. In the following method embodiments, the OLT may be replaced with a component (for example, a chip or a circuit) of the OLT, and the ONU may be replaced with a component (for example, a chip or a circuit) of the ONU. It should be noted that the primary device shown in FIG. 2 may replace the OLT, and the secondary device shown in FIG. 2 may replace the ONU, to perform the following method procedure.

To better understand the technical solutions of this application, technologies related to an ONU activation mechanism in the technical solutions of this application are briefly described.

An activation process of the ONU includes three steps: parameter learning (parameter learning), serial number acquisition (serial number acquisition), and ranging (ranging). Specifically, in the parameter learning step, the ONU does not actively send a signal, and obtains an operational parameter for upstream transmission. In the serial number acquisition step, the OLT discovers a new ONU based on a serial number of the new ONU, and then assigns an ONU identifier (ID) to the new ONU. In the ranging step, after receiving a ranging response message of the ONU, the OLT obtains a round trip delay (round trip delay, RTD) of the ONU through calculation based on sending time of a ranging request message and arrival time of the ranging response message, obtains an equalization delay (equalization delay, EQD) of the ONU through calculation based on the sending time of the ranging request message, the arrival time of the ranging response message, response processing time of the ONU, and a system reference equalization delay, and sends the EQD to the ONU. The ONU may have a plurality of different states in the entire activation process. In a possible implementation, the ONU has seven states: an initial state (Initial state), also referred to as an O1 state; a standby state (Standby state), also referred to as an O2 state; a serial number state (Serial_Number state), also referred to as an O3 state; a ranging state (Ranging state), also referred to as an O4 state; an operation state (Operation state), also referred to as an O5 state; a popup state (POPUP state), also referred to as an O6 state; and an emergency stop state (Emergency Stop state), also referred to as an O7 state. It should be noted that the activation procedure of the ONU may also be referred to as a registration procedure of the ONU. The ONU completes registration with the OLT by performing steps of the activation procedure.

If an optical transceiver option (transceiver option) supported by an optical transceiver included in the OLT does not match an optical transceiver option supported by an optical transceiver included in the ONU, reliability of sending upstream data by the ONU to the OLT may be reduced. To resolve this problem, embodiments of this application provide a communication method. The method may be applied to the activation procedure of the ONU. When the optical transceiver option supported by the optical transceiver included in the OLT matches the optical transceiver option supported by the optical transceiver included in the ONU, the reliability of sending the upstream data by the ONU to the OLT is improved, thereby ensuring performance of the optical network.

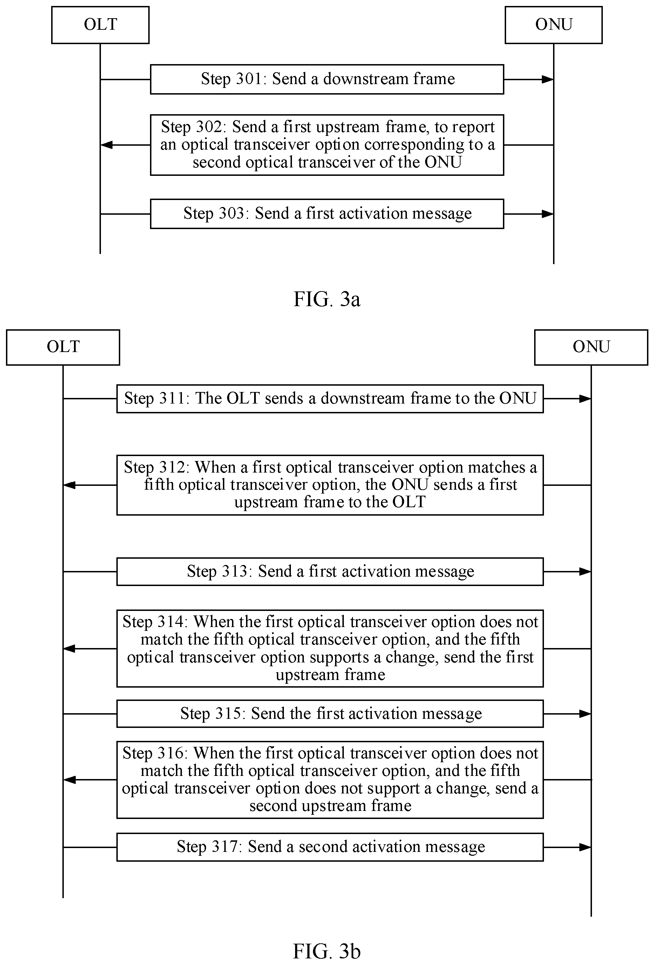

FIG. 3a is a step flowchart of a first embodiment of a communication method according to this application.

Step 301: An OLT sends a downstream frame to an ONU.

The OLT sends the downstream frame to the ONU, where the downstream frame carries first indication information, and the first indication information indicates a first optical transceiver option of the OLT. The first optical transceiver option indicates performance of a first optical transceiver. For example, the first optical transceiver option indicates a mean launch power minimum, a mean launch power maximum, a launch optical power represented by OMA-TDEC (optical modulation amplitude, OMA, transmitter and dispersion eye closure, TDEC) of an optical signal, a launch optical power without input to the optical transceiver, maximum time for which the optical transceiver is allowed to be enabled, minimum extinction ratio, or the like. This is not specifically limited. A specific type of the first optical transceiver option is not limited in this embodiment, provided that the first optical transceiver option indicates related performance of the first optical transceiver for sending an upstream optical signal.

Optionally, the OLT sends the downstream frame in a broadcast manner, to discover the unregistered ONU. The downstream frame indicates grant time, to indicate the to-be-activated ONU to send an upstream frame to the OLT in a time window corresponding to the grant time, to report device information of the ONU. The downstream frame is further used to carry the first indication information, and the first indication information indicates the first optical transceiver option. The first optical transceiver option is an optical transceiver option supported by the first optical transceiver included in the OLT.

The first optical transceiver option corresponds to a specific optical path loss class. For example, the first optical transceiver option is an option (for example, an optical transceiver option N1 or N1b) included in an optical path loss class N1. For another example, the first optical transceiver option is an option (for example, an optical transceiver option C+ or C+b) included in an optical path loss class C+.

The optical path loss class N1 and the optical path loss class C+ are described with reference to Table 1.

**Table 1**

| Optical path loss class | N1 | C+ |
|---|---|---|
| Maximum path loss | 29 decibel (dB) | 32 dB |
| Minimum path loss | 14 dB | 17 dB |

For example, for the optical path loss class N1, the minimum path loss is 14 dB, and the maximum path loss is 29 dB. For the optical path loss class C+, the minimum path loss is 17 dB, and the maximum path loss is 32 dB.

The first indication information carried in the downstream frame in this embodiment indicates the first optical transceiver option. There may be a plurality of specific implementations of the downstream frame. This is not limited in this application. The following provides several possible implementations.

### Optional implementation 1

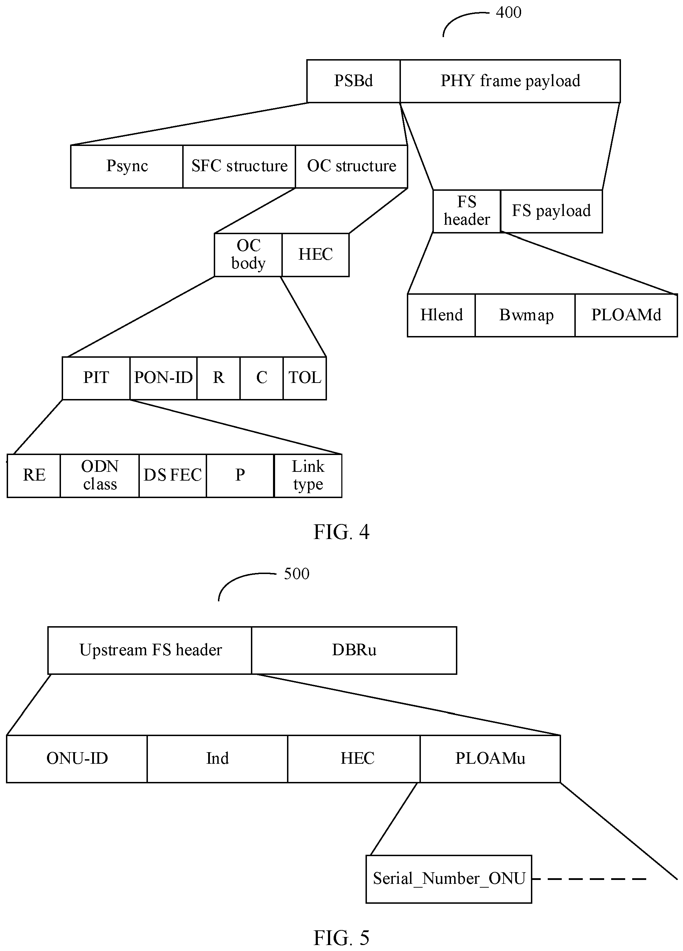

For a structure of a downstream frame shown in this implementation, refer to FIG. 4. FIG. 4 is an example diagram of a frame structure of an embodiment of the downstream frame according to this application. The downstream frame 400 includes a physical synchronization block downstream (physical synchronization block downstream, PSBd) and a physical layer frame payload (physical layer frame payload, PHY frame payload). The PSBd includes a physical synchronization (physical synchronization, PSync) field, a superframe counter (superframe counter, SFC) field, and an operation control (operation control, OC) structure (structure) field. The PHY frame payload includes an FS header (Header) and an FS payload. The FS header specifically includes a length end character (HLend), a bandwidth map (bandwidth map, BWmap) field, and a physical layer operations, administration, and maintenance downstream (physical layer operations, administration, and maintenance downstream, PLOAMd) field. The BWmap field includes slot scheduling information, and the slot scheduling information indicates grant time or slot information. The ONU reports a serial number or service data to the OLT based on the indicated grant time. The OC structure field includes an OC data body (body) field and a header error control (header error control, HEC) field. The OC body field includes a payload information table (payload information table, PIT) field, a passive optical network-identifier (passive optical network-identifier, PON-ID) field, a reserved field (Reserved, R), a transmit optical level reference point indicator (transmit optical level reference point indicator, c) field, and a transmit optical level (transmit optical level, TOL). The PIT field specifically includes an RE flag field, an optical distribution network optical path loss class (ODN optical path loss class, ODN class) field, a downstream forward error correction (downstream forward error correction, DS FEC) field, a P flag (P flag, P) field, and a physical layer link type (Link type) field. The ODN class field indicates an optical transceiver option, that is, identifies a nominal optical parameter of an optical transceiver. The ODN class field may be used to carry the first indication information in this embodiment. A value of the first indication information indicates the first optical transceiver option. When the value of the first indication information is a third value, the first indication information indicates that the first optical transceiver option is N1; when the value of the first indication information is a fourth value, the first indication information indicates that the first optical transceiver option is N1b; when the value of the first indication information is a fifth value, the first indication information indicates that the first optical transceiver option is C+; or when the value of the first indication information is a sixth value, the first indication information indicates that the first optical transceiver option is C+b, where any two of the third value, the fourth value, the fifth value, and the sixth value are different from each other.

For example, refer to Table 2. An example in which the ODN class field includes three bits is used.

**Table 2**

| Code value (Code value) | Optical transceiver option (transceiver option) |
|---|---|
| 000 | N1 |
| 001 | N2 |
| 010 | E1 |
| 011 | E2 |
| 100 | C+ |
| 101 | N1b |
| 110 | C+b |
| 111 | Reserved |

As shown in Table 2, if the first optical transceiver option of the OLT is N1, the third value of the first indication information is 000. If the first optical transceiver option of the OLT is N1b, the fourth value of the first indication information is 101. If the first optical transceiver option of the OLT is C+, the fifth value of the first indication information is 100. If the first optical transceiver option of the OLT is C+b, the sixth value of the first indication information is 110.

### Optional implementation 2

The downstream frame shown in this example includes a configuration capability (burst profile) message, the burst profile message carries first indication information, and the first indication information indicates a first optical transceiver option. The downstream frame further includes an ODN class field (for details, refer to the descriptions corresponding to FIG. 4), and the ODN class field indicates an optical path loss class. For example, the ODN class field indicates an optical path loss class N1, and the first indication information carried in the burst profile message indicates that the first optical transceiver option is N1 or N1b. For another example, the ODN class field indicates an optical path loss class C+, and the first indication information carried in the burst profile message indicates that the first optical transceiver option is C+ or C+b. For details, refer to the following example.

The ODN class field indicates an optical path loss class. For details, refer to Table 3.

**Table 3**

| Code value | ODN class |
|---|---|
| 000 | N1 |
| 001 | N2 |
| 010 | E1 |
| 011 | E2 |
| 100 | C+ |
| 101-111 | Reserved |

For the first indication information carried in the burst profile message, refer to Table 4.

**Table 4**

| Byte | Byte name | Specific bits included in the byte |
|---|---|---|
| 5 | burst profile control 1 | VVVRBBPP |
| 6 | burst profile control 2 | NNMMRRCF |

For example, the 4^{th} bit (namely, the bit R in the bit sequence VVVRBBPP) in an order of a most significant bit to a least significant bit in the 5^{th} byte in the burst profile message may be used as the first indication information, to indicate the first optical transceiver option. For another example, the 5^{th} bit (namely, the 1^{st} R in the bit sequence NNMMRRCF) in the 6^{th} byte in the burst profile message may alternatively be used as the first indication information, to indicate the first optical transceiver option. For another example, the 6^{th} bit (namely, the 2^{nd} R in the bit sequence NNMMRRCF) in the 6^{th} byte in the burst profile message may alternatively be used as the first indication information, to indicate the first optical transceiver option. When a value of a bit indicating the first optical transceiver option is 0, the bit indicates the optical transceiver option N1 or the optical transceiver option C+. When the value of the bit indicating the first optical transceiver option is 1, the bit indicates the optical transceiver option N1b or the optical transceiver option C+b. For example, if the OLT expects to indicate the first optical transceiver option N1b to the ONU, a value of the ODN class field is 000, and the value of the first indication information is 1. The ONU determines, based on the ODN class field whose value is 000, that the first optical transceiver option corresponds to the optical path loss class N1; and then determines the corresponding optical transceiver option N1b or C+b based on the first indication information whose value is 1. In the optical transceiver option N1b or C+b, only the optical transceiver option N1b corresponds to the optical path loss class N1 (that is, only the optical transceiver option N1b is an optical transceiver option in the optical path loss class N1). Therefore, the ONU determines that the first optical transceiver option is N1b. By analogy, if the OLT needs to indicate the first optical transceiver option N1 to the ONU, because the optical transceiver option N1 corresponds to the optical path loss class N1, the value of the ODN class field is 000, and the value of the first indication information carried in the burst profile message is 0. If the OLT needs to indicate the first optical transceiver option C+ to the ONU, because the optical transceiver option C+ corresponds to the optical path loss class C+, the value of the ODN class field is 100, and the value of the first indication information carried in the burst profile message is 0. If the OLT needs to indicate the first optical transceiver option C+b to the ONU, because the optical transceiver option C+b corresponds to the optical path loss class C+, the value of the ODN class field is 100, and the value of the first indication information carried in the burst profile message is 1. A person skilled in the art may understand that the foregoing example is merely a possible implementation, and a specific bit indicating the first optical transceiver option and a value meaning are not limited in this application.

It should be noted that, in this embodiment, the descriptions of a manner in which the downstream frame carries the first indication information and the descriptions of values of fields are all optional examples, and are not limited, provided that the ONU can determine, based on the first indication information carried in the downstream frame, the first optical transceiver option supported by the first optical transceiver. It can be learned from the foregoing descriptions of the first indication information that the first optical transceiver option in this embodiment is one of N1, N1b, C+, and C+b. The following describes each first optical transceiver option in detail with reference to Table 5.

**Table 5**

| Optical transceiver option (transceiver option) | Unit | N1 | N1b | C+ | C+b |
|---|---|---|---|---|---|
| First parameter | Decibel-milliwatts (dBm) | -22.7 | -21.7 | -25.7 | -24.7 |
| Second parameter | dBm | -22.53 | -21.53 | -25.53 | -24.53 |
| Third parameter | dBm | -2.2 | -2.2 | -5.2 | -5.2 |

It can be learned from Table 5 that the first optical transceiver option of the first optical transceiver indicates the performance of the first optical transceiver. In this case, different optical transceiver options indicate different performance of the first optical transceiver. The first parameter is sensitivity at a bit error ratio reference level (sensitivity at BER reference level). The foregoing BER is short for bit error rate (Bit Error Ratio). The second parameter is optical modulation amplitude sensitivity at the bit error ratio reference level (OMA sensitivity at BER reference level). The third parameter is an overload at the bit error ratio reference level (overload at BER reference level). It can be learned from Table 5 that the first parameter to which the first optical transceiver option N1 is mapped is -22.7 dBm, the first parameter to which the first optical transceiver option N1b is mapped is - 21.7 dBm, the second parameter to which the first optical transceiver option N1 is mapped is -22.53 dBm, the second parameter to which the first optical transceiver option N1b is mapped is -21.53 dBm, and the third parameters to which the first optical transceiver option N1 and the first optical transceiver option N1b are mapped are both -2.2 dBm. The first parameter to which the first optical transceiver option C+ is mapped is -25.7 dBm, the first parameter to which the first optical transceiver option C+b is mapped is -24.7 dBm, the second parameters to which the first optical transceiver option C+ and the first optical transceiver option C+b are mapped are respectively -25.53 dBm and -24.53 dBm, and the third parameters to which the first optical transceiver option C+ and the first optical transceiver option C+b are mapped are both -5.2 dBm.

Step 302: The ONU sends a first upstream frame to the OLT, to report an optical transceiver option corresponding to a second optical transceiver of the ONU.

Optionally, the ONU obtains the second optical transceiver option supported by the second optical transceiver. The second optical transceiver is an optical transceiver included in the ONU. For the second optical transceiver option supported by the second optical transceiver shown in this embodiment, refer to Table 6.

**Table 6**

| Optical path loss class | | N1 | | C+ | |
|---|---|---|---|---|---|
| Second optical transceiver option | | N1 | N1b | C+ | C+b |
| Mean launch power minimum (Mean launch power minimum) | dBm | 6.8 | 7.8 | 6.8 | 7.8 |
| Mean launch power maximum (Mean launch power maximum) | dBm | 11.8 | 11.8 | 11.8 | 11.8 |
| Second optical transceiver option | | N1 | N1b | C+ | C+b |
| Target parameter | dBm | 4.47 | 5.47 | 4.47 | 5.47 |
| Maximum TDEC (transmitter and dispersion eye closure) | dB | 5 | | | |
| Launch optical power without input to the optical transceiver (Launch optical power without input to the transmitter) | dBm | An output optical power of the optical transceiver is less than -45 (less than -45) | | | |
| Maximum time for which the optical transceiver is allowed to be enabled (Maximum Tx enable time) | Bits transmitted in nanoseconds (Bits (ns)) | 6400 (in about 128.6) | | | |
| Maximum time for which the optical transceiver is allowed to be disabled (Maximum Tx disable time) | Bits (ns) | 6400 (in about 128.6) | | | |
| Minimum extinction ratio (Minimum extinction ratio) | dB | 5 | | | |

It can be learned from Table 6 that the second optical transceiver option supported by the second optical transceiver indicates performance of the second optical transceiver. In this case, when the second optical transceiver supports different second optical transceiver options, different performance of the second optical transceiver is described. If the second optical transceiver option supported by the second optical transceiver is the optical transceiver option N1, the mean launch power minimum to which the optical transceiver option N1 is mapped is 6.8 dBm, the mean launch power maximum to which the optical transceiver option N1 is mapped is 11.8 dBm, and the target parameter to which the optical transceiver option N1 is mapped is 4.47 dBm, where the target parameter is the launch optical power represented by OMA-TDEC. If the second optical transceiver option supported by the second optical transceiver is the optical transceiver option N1b, the mean launch power minimum to which the optical transceiver option N1b is mapped is 7.8 dBm, the mean launch power maximum to which the optical transceiver option N1b is mapped is 11.8 dBm, and the target parameter to which the optical transceiver option N1b is mapped is 5.47 dBm. If the second optical transceiver option supported by the second optical transceiver is the optical transceiver option C+, the mean launch power minimum to which the optical transceiver option C+ is mapped is 6.8 dBm, the mean launch power maximum to which the optical transceiver option C+ is mapped is 11.8 dBm, and the target parameter to which the optical transceiver option C+ is mapped is 4.47 dBm. If the second optical transceiver option supported by the second optical transceiver is the optical transceiver option C+b, the mean launch power minimum to which the optical transceiver option C+b is mapped is 7.8 dBm, the mean launch power maximum to which the optical transceiver option C+b is mapped is 11.8 dBm, and the target parameter to which the optical transceiver option C+b is mapped is 5.47 dBm. Specific content of the second optical transceiver options is not limited in this embodiment. For example, maximum TDECs (transmitter and dispersion eye closures) to which the second optical transceiver options N1, N1b, C+, and C+b supported by the second optical transceiver are mapped are all 5 dB. The launch optical powers without input to the transmitter to which the second optical transceiver options N1, N1b, C+, and C+b supported by the second optical transceiver are mapped are all less than -45 dBm. Pieces of the maximum Tx enable time to which the second optical transceiver options N1, N1b, C+, and C+b supported by the second optical transceiver are mapped are all about 128.6 ns in which 6400 bits are transmitted. Pieces of the maximum Tx disable time to which the second optical transceiver options N1, N1b, C+, and C+b supported by the second optical transceiver are mapped are all about 128.6 ns in which 6400 bits are transmitted. The minimum extinction ratios to which the second optical transceiver options N1, N1b, C+, and C+b supported by the second optical transceiver are mapped are all 5 dB.

The second optical transceiver is an optical transceiver included in the ONU. The ONU obtains, based on the first indication information carried in the downstream frame from the OLT, the first optical transceiver option supported by the OLT.

Optionally, the ONU may determine whether the first optical transceiver option matches the second optical transceiver option supported by the second optical transceiver. That the first optical transceiver option matches the second optical transceiver option includes any one of the following examples.

Example 1: The first optical transceiver option is the optical transceiver option N1, and the second optical transceiver option supported by the second optical transceiver is the optical transceiver option N1 and/or N1b.

Example 2: The first optical transceiver option and the second optical transceiver option supported by the second optical transceiver are both the optical transceiver option N1b.

Example 3: The first optical transceiver option is the optical transceiver option C+, and the second optical transceiver option supported by the second optical transceiver is the optical transceiver option C+ and/or C+b.

Example 4: The first optical transceiver option and the second optical transceiver option supported by the second optical transceiver are both the optical transceiver option C+b.

When the ONU determines that the first optical transceiver option matches the second optical transceiver option supported by the second optical transceiver, the ONU sends the first upstream frame to the OLT.

When the ONU determines that the first optical transceiver option does not match the second optical transceiver option supported by the second optical transceiver, the ONU may choose not to send the upstream frame, or may choose to send the upstream frame and report the second optical transceiver option in the upstream frame, to attempt to register with the OLT, or attempt to perform data communication with the OLT. Alternatively, information indicating that the first optical transceiver option does not match the second optical transceiver option may be carried in the upstream frame, so that the OLT can determine that the optical transceiver option corresponding to the first optical transceiver of the OLT does not match the optical transceiver option corresponding to the second optical transceiver of the ONU. When the ONU does not send the upstream frame to the OLT, the ONU may generate a local alarm. For example, the ONU generates an alarm by using an indicator, a display, a loudspeaker, or the like of the ONU. For another example, the ONU may generate an alarm through a management platform of the ONU. Through the alarm, operations and maintenance personnel can obtain an event that the first optical transceiver option does not match the second optical transceiver option supported by the second optical transceiver. When the ONU sends the upstream frame to the OLT, in addition to including the optical transceiver option corresponding to the second optical transceiver in the upstream frame, the ONU may further indicate, to the OLT via a field in the upstream frame, that the first optical transceiver option does not match the second optical transceiver option. For example, a bit "1110" in a 40^{th} byte in a Serial_Number_ONU message may indicate that the first optical transceiver option does not match the second optical transceiver option. It should be noted that, in this embodiment, descriptions of a type of a message used by the ONU to indicate, to the OLT, that the first optical transceiver option does not match the second optical transceiver option, and descriptions of specific bytes and bits included in the message are all optional examples. These are not limited.

Optionally, the ONU may not determine whether the first optical transceiver option matches the second optical transceiver option supported by the second optical transceiver, but directly send the first upstream frame to the OLT, to report the optical transceiver option corresponding to the second optical transceiver of the ONU.

Optionally, the ONU obtains the grant time indicated by the downstream frame, and sends the first upstream frame to the OLT. The first upstream frame is used to request to register with the OLT. Optionally, the first upstream frame further carries second indication information, and the second indication information indicates the second optical transceiver option of the second optical transceiver. The second optical transceiver option is an optical transceiver option supported by the second optical transceiver, and indicates the performance of the second optical transceiver of the ONU. It may be understood that the first optical transceiver option matches the second optical transceiver option.

For descriptions of a structure of the first upstream frame, refer to FIG. 5. FIG. 5 is an example diagram of a frame structure of an embodiment of an upstream frame according to this application. The first upstream frame 500 shown in this embodiment includes an upstream (Upstream) FS header. The FS header includes an ONU-ID field, an indication (indication, Ind) field, a hybrid error control (hybrid error control, HEC) field, and a physical layer operations, administration, and maintenance upstream (PLOAM upstream, PLOAMu) field. The PLOAMu field includes at least an ONU serial number (Serial_Number_ONU) message. The ONU serial number shown in this embodiment is used as a device identifier of the ONU. In this embodiment, an example in which the Serial_Number_ONU message carries the second indication information is used. The following describes a manner in which the Serial_Number_ONU message carries the second indication information to indicate the second optical transceiver option.

When a value of the second indication information carried in the Serial_Number_ONU message is a first value, the second indication information indicates that the second optical transceiver option is the optical transceiver option N1 or the optical transceiver option C+. When the value of the second indication information carried in the Serial_Number_ONU message is a second value, the second indication information indicates that the second optical transceiver option is the optical transceiver option N1b or the optical transceiver option C+b.

For the Serial_Number_ONU message, refer to Table 7.

**Table 7**

| Byte | Byte name | Specific bits included in the byte |
|---|---|---|
| 40 | Activation debug information (Activation Debug information) | DDDDRRCS |

In the example shown in Table 7, the 5^{th} bit or the 6^{th} bit in an order of a most significant bit to a least significant bit in the 40^{th} byte of the Serial_Number_ONU message may be used as the second indication information, to indicate the second optical transceiver option. The first value is 0, and the second value is 1. It may be understood that if the second optical transceiver option of the ONU is N1 or C+, the value of the second indication information is 0. If the second optical transceiver option of the ONU is N1b or C+b, the value of the second indication information is 1.

A manner of indicating the second optical transceiver option via the Serial_Number_ONU message is not limited in this embodiment. An example of the manner is shown in Table 8.

**Table 8**

| Byte | Byte name | Specific bits included in the byte |
|---|---|---|
| 39 | Power levelling capability (power levelling capability) | For details, refer to 11.2.6.8 in the standard. |

A value range of an octet (Octet) in a 39^{th} byte in the Serial_Number_ONU message may be modified, to indicate the second optical transceiver option by using a bit in an idle state in the value range of the octet.

For the ONU shown in this embodiment, to register with the OLT, the ONU sends a serial number (serial number, SN) of the ONU to the OLT. A manner in which the ONU sends the SN to the OLT is not limited in this embodiment. For example, the SN is carried in the Serial_Number_ONU message of the first upstream frame. For another example, the SN is carried in a Serial_Number_ONU physical layer (physical layer) operation. For still another example, the SN is carried in an operations, administration, and maintenance (operations, administration, and maintenance, OAM) message. A person skilled in the art may understand that the foregoing descriptions of a type of the message used to carry the second indication information and a manner in which the message carries the second indication information are possible implementations. A specific bit indicating the second optical transceiver option and a value meaning are not limited in this application.

A quantity of second optical transceiver options supported by the second optical transceiver is not limited in this embodiment. If the second optical transceiver supports one second optical transceiver option (for example, the optical transceiver option N1b), an optical transceiver option currently configured for the second optical transceiver is the second optical transceiver option (for example, the optical transceiver option N1b). The second optical transceiver of the ONU sends an upstream optical signal to the OLT based on parameters indicated by the currently configured optical transceiver option (for example, the optical transceiver option N1b). If the second optical transceiver supports a plurality of second optical transceiver options (for example, the optical transceiver options N1 and N1b), the optical transceiver option currently configured for the second optical transceiver is one of the plurality of second optical transceiver options (for example, the optical transceiver option N1). The second optical transceiver of the ONU sends an upstream optical signal to the OLT based on parameters indicated by the currently configured optical transceiver option (for example, the optical transceiver option N1). The optical transceiver option that corresponds to the second optical transceiver and that is reported by the ONU indicates the optical transceiver option currently configured for the second optical transceiver. Optionally, when the upstream frame sent by the ONU shown in step 302 is a Serial_Number_ONU message for a registration request, the OLT performs step 303.

Step 303: The OLT sends a first activation message to the ONU.

When the OLT receives the SN from the ONU, the OLT determines that the SN is a new SN, that is, the SN has no associated ONU ID, or the OLT has not assigned an ONU ID to the ONU corresponding to the SN. In this case, the OLT assigns an ONU ID to the ONU, and creates a mapping relationship between the SN and the ONU ID.

The OLT sends the first activation message to the ONU, where the first activation message carries activation indication information and the ONU ID, and the activation indication information indicates that the OLT successfully assigns the ONU ID to the ONU. Specifically, after assigning the ONU ID to the ONU, the OLT sends the ONU ID and the activation indication information via the first activation message. The first activation message further includes the SN, and the SN carried in the first activation message indicates that the OLT has successfully assigned the ONU ID to the ONU corresponding to the SN. It should be noted that the first activation message is not limited in this application. Optionally, the first activation message may include an assign ONU ID (Assign ONU_ID) message and/or a collision feedback message (collision_feedback message). For example, when the first activation message includes the Assign ONU_ID message, the Assign ONU_ID message carries the activation indication information, the ONU ID, and the SN. Therefore, the ONU may receive the Assign ONU_ID message based on the SN, and obtain the corresponding ONU ID assigned by the OLT. The activation indication information may be an 18^{th} byte in the Assign ONU_ID message, that is, a name of the byte is allocation feedback (allocation feedback). A person skilled in the art may understand that the descriptions of the type of the activation message and the carried field in this embodiment are optional examples, and these are not limited.

In this embodiment, the OLT performs ranging on the ONU, to obtain an RTD of the ONU through calculation, and then sends an EQD to the ONU. A specific process in which the OLT performs ranging on the ONU is not described in detail. After the ranging is completed and the ONU enters a state O5, authentication on the ONU succeeds, that is, the ONU can access a PON interface of the OLT, and can be managed by the OLT, to implement upstream and downstream data transmission with the OLT. In this embodiment, an example in which the ONU is successfully activated is used. If the authentication on the ONU fails, it may also be understood that an identity of the ONU is invalid, that is, the ONU cannot or is not allowed to access the PON interface of the OLT. In this case, the OLT does not perform a procedure like step 303, so that the OLT does not manage the ONU.

When obtaining the first optical transceiver option and the second optical transceiver option, the OLT may also determine whether the first optical transceiver option matches the second optical transceiver option, and then register with the ONU when determining that the first optical transceiver option matches the second optical transceiver option. In this way, it is ensured that the second optical transceiver option of the ONU that is successfully activated matches the first optical transceiver option of the OLT, to ensure that the upstream optical signal sent by the ONU can be successfully received by the OLT, thereby ensuring reliability of transmitting the upstream optical signal. Optionally, when determining that the first optical transceiver option does not match the second optical transceiver option, the OLT may also continue a registration procedure of the ONU, to attempt to receive the upstream optical signal from the ONU when the first optical transceiver option does not match the second optical transceiver option. Optionally, when obtaining the first optical transceiver option and the second optical transceiver option, the OLT may not determine whether the first optical transceiver option matches the second optical transceiver option, but directly registers with the ONU.

If the optical network is used in a scenario like a 50G PON or a 200G PON, for example, used in the 50G PON, because technical difficulty of the 50G PON is high, for the 50G PON, two independent transceiver options are defined for a same optical path loss class, for example, the optical transceiver options N1 and N1b, or for another example, the optical transceiver options C+ and C+b. It should be noted that the descriptions of the optical transceiver options N1, N1b, C+, and C+b in this embodiment are all optional examples, and may be further applied to optical transceiver options of other types and other quantities. This is not specifically limited. Even in a same optical path loss class, different optical transceiver options reflect different optical transceiver performance. However, by using the method shown in this embodiment, in the registration process of the ONU, a process of mutual negotiation between the first optical transceiver option of the OLT and the second optical transceiver option of the ONU is implemented, to ensure that the ONU is in a state in which the first optical transceiver option matches the second optical transceiver option, and further ensure that the performance of the first optical transceiver matches the performance of the second optical transceiver. For example, when the first optical transceiver option matches the second optical transceiver option, receive sensitivity (indicated by the first optical transceiver option) of the first optical transceiver is that an optical power (indicated by the second optical transceiver option) from the second optical transceiver can be successfully received. In this way, during transmission of the upstream optical signal, the reliability of transmitting the upstream optical signal can be effectively ensured. In addition, based on the negotiation process, the OLT can obtain the second optical transceiver option of the ONU, and the ONU can obtain the first optical transceiver option of the OLT. This facilitates operations and maintenance of the optical network.

FIG. 3b is a step flowchart of a second embodiment of the communication method according to this application. In the embodiment shown in FIG. 3b, an optical transceiver option supported by an ONU can be changed based on an indication of an OLT. A specific process is as follows:
Step 311: The OLT sends a downstream frame to the ONU.

For descriptions of an execution process of step 311 shown in this embodiment, refer to step 301 in FIG. 3a. Details are not described again.

Step 312: The ONU sends a first upstream frame to the OLT, to report an optical transceiver option corresponding to a second optical transceiver of the ONU.

For example, the optical transceiver option corresponding to the second optical transceiver of the ONU in this embodiment is a fifth optical transceiver option. The fifth optical transceiver option indicates performance of the second optical transceiver. For detailed descriptions of the fifth optical transceiver option in this embodiment, refer to the descriptions of the second optical transceiver option shown in FIG. 3a. Details are not described again.

Optionally, the ONU shown in step 312 may determine whether the fifth optical transceiver option matches a first optical transceiver option. For detailed descriptions, refer to step 302. Details are not described again. In this case, in this example, when the ONU determines that the first optical transceiver option matches the fifth optical transceiver option, the ONU sends the first upstream frame to the OLT.

Further, optionally, the ONU may not determine whether the first optical transceiver option matches the fifth optical transceiver option, but directly send the first upstream frame to the OLT, to report the optical transceiver option corresponding to the second optical transceiver of the ONU. Optionally, when the upstream frame sent by the ONU shown in step 312 is a Serial_Number_ONU message for a registration request, the OLT performs step 313.

Step 313: The OLT sends a first activation message to the ONU.

For descriptions of step 313 shown in this embodiment, refer to step 303 corresponding to FIG. 3a. Details are not described again.

Step 314: When the first optical transceiver option does not match the fifth optical transceiver option, and the fifth optical transceiver option supports a change, the ONU sends the first upstream frame to the OLT.

For descriptions of a case in which the ONU determines that the first optical transceiver option does not match the fifth optical transceiver option in this embodiment, refer to the descriptions of a case in which the first optical transceiver option does not match the second optical transceiver option and that corresponds to FIG. 3a. Details are not described again. If the ONU determines that the first optical transceiver option does not match the fifth optical transceiver option, the ONU continues to determine whether the fifth optical transceiver option supports a change. That the fifth optical transceiver option supports a change means that the fifth optical transceiver option supported by the second optical transceiver can be changed. For example, the fifth optical transceiver option is N1. If the fifth optical transceiver option supported by the second optical transceiver can be changed to one of N1b, C+, or C+b, it indicates that the fifth optical transceiver option supports an optical transceiver option change. That the fifth optical transceiver option does not support an optical transceiver option change means that the fifth optical transceiver option cannot be changed. For example, the fifth optical transceiver option is N1, and cannot be changed.

When the ONU determines that the first optical transceiver option does not match the fifth optical transceiver option, the ONU changes the fifth optical transceiver option to the second optical transceiver option. In this embodiment, if the first optical transceiver option does not match the fifth optical transceiver option, and the fifth optical transceiver option supports a change, the ONU changes the optical transceiver option supported by the second optical transceiver from the fifth optical transceiver option to the second optical transceiver option. The first optical transceiver option matches the second optical transceiver option. For descriptions of the case in which the first optical transceiver option matches the second optical transceiver option, refer to step 302 corresponding to FIG. 3a. Details are not described again. When changing the optical transceiver option supported by the second optical transceiver from the fifth optical transceiver option to the second optical transceiver option, the ONU sends the first upstream frame to the OLT, to report the optical transceiver option (namely, the second optical transceiver option after the change) corresponding to the second optical transceiver of the ONU. For descriptions of the first upstream frame, refer to step 302 corresponding to FIG. 3a. Details are not described again.

A quantity of fifth optical transceiver options supported by the second optical transceiver is not limited in this embodiment. If the second optical transceiver supports one fifth optical transceiver option, the fifth optical transceiver option does not match the first optical transceiver option and supports a change, an optical transceiver option currently configured for the second optical transceiver is the fifth optical transceiver option, and the ONU changes the optical transceiver option supported by the second optical transceiver to the second optical transceiver option, the optical transceiver option currently configured for the second optical transceiver is also changed to the second optical transceiver option. The second optical transceiver of the ONU sends an upstream optical signal to the OLT based on parameters indicated by the currently configured second optical transceiver option. If the second optical transceiver supports a plurality of fifth optical transceiver options (for example, the optical transceiver options N1 and N1b), the fifth optical transceiver options do not match the first optical transceiver option and support changes, and the ONU changes the optical transceiver option supported by the second optical transceiver to the second optical transceiver option, there may also be a plurality of second optical transceiver options, and the optical transceiver option currently configured for the second optical transceiver is one of the plurality of second optical transceiver options. The second optical transceiver of the ONU sends an upstream optical signal to the OLT based on parameters indicated by the currently configured optical transceiver option. Optionally, when the upstream frame sent by the ONU shown in step 314 is a Serial_Number_ONU message for a registration request, the OLT performs step 315.

Step 315: The OLT sends the first activation message to the ONU.

When receiving the first upstream frame in step 314, the OLT sends the first activation message to the ONU. For detailed descriptions, refer to step 303 corresponding to FIG. 3a. Details are not described again.

Step 316: When the first optical transceiver option does not match the fifth optical transceiver option, and the fifth optical transceiver option does not support a change, the ONU sends a second upstream frame to the OLT.

When the first optical transceiver option does not match the fifth optical transceiver option, the ONU sends the second upstream frame to the OLT, to attempt to register with the OLT. The second upstream frame reports the optical transceiver option (namely, the fifth optical transceiver option that does not support a change) corresponding to the second optical transceiver of the ONU. For descriptions of sending the second upstream frame by the ONU, refer to the descriptions of sending the first upstream frame in step 312 corresponding to FIG. 3b. Details are not described again. Optionally, when the upstream frame sent by the ONU shown in step 306 is a Serial_Number_ONU message for a registration request, the OLT performs step 317.

Step 317: The OLT sends a second activation message to the ONU.

For descriptions of step 317, refer to the descriptions of the first activation message shown in step 315 corresponding to FIG. 3b. Details are not described again.

According to the method shown in this embodiment, in the registration process of the ONU, a process of mutual negotiation between the first optical transceiver option of the OLT and the fifth optical transceiver option of the ONU is implemented. If the first optical transceiver option does not match the fifth optical transceiver option, the ONU may change the fifth optical transceiver option to the second optical transceiver option, and the second optical transceiver option matches the first optical transceiver option. In this way, it is ensured that performance of a first optical transceiver matches the performance of the second optical transceiver.

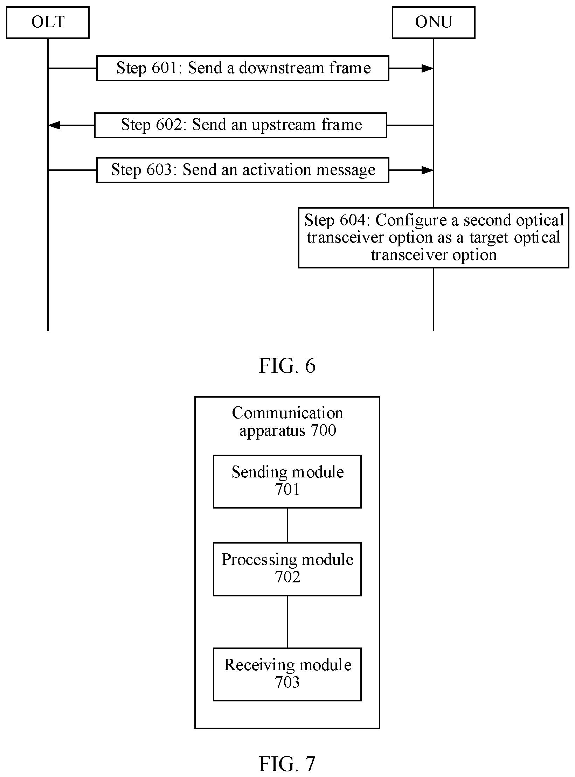

FIG. 6 is a step flowchart of a third embodiment of the communication method according to this application. In embodiments shown in FIG. 3a and FIG. 3b, an example in which the OLT and the ONU each support only one optical transceiver option is used. In the embodiment shown in FIG. 6, an OLT and an ONU each support a plurality of optical transceiver options.

Step 601: The OLT sends a downstream frame to the ONU.

To register the ONU with the OLT, the OLT sends the downstream frame in a broadcast manner. The downstream frame indicates grant time. For detailed descriptions, refer to step 301 corresponding to FIG. 3a. Details are not described again. The downstream frame carries first indication information, and the first indication information indicates a first optical transceiver option and a fourth optical transceiver option. For descriptions of the first optical transceiver option, refer to the descriptions corresponding to FIG. 3a. Details are not described again. The fourth optical transceiver option shown in this embodiment indicates performance of a first optical transceiver, and the first optical transceiver option and the fourth optical transceiver option correspond to a same optical path loss class. For example, the first optical transceiver option and the fourth optical transceiver option correspond to an optical path loss class N1; and one of the first optical transceiver option and the fourth optical transceiver option is an optical transceiver option N1, and the other is an optical transceiver option N1b. For another example, the first optical transceiver option and the fourth optical transceiver option correspond to an optical path loss class C+; and one of the first optical transceiver option and the fourth optical transceiver option is an optical transceiver option C+, and the other is an optical transceiver option C+b. For descriptions of indicating the fourth optical transceiver option by the first indication information, refer to the descriptions of indicating the first optical transceiver option by the first indication information in step 301 corresponding to FIG. 3a. Details are not described again.

Step 602: The ONU sends an upstream frame to the OLT, to report optical transceiver options corresponding to a second optical transceiver of the ONU.

In this embodiment, the ONU supports a second optical transceiver option and a third optical transceiver option. Both the second optical transceiver option and the third optical transceiver option are the options supported by the second optical transceiver included in the ONU. For descriptions of content of the second optical transceiver option and the third optical transceiver option, refer to the descriptions of the content, of the optical transceiver option supported by the second optical transceiver, corresponding to FIG. 3a. Details are not described again. The second optical transceiver option and the third optical transceiver option shown in this embodiment correspond to a same optical path loss class. For example, the second optical transceiver option and the third optical transceiver option correspond to the optical path loss class N1; and one of the second optical transceiver option and the third optical transceiver option is the optical transceiver option N1, and the other is the optical transceiver option N1b. For another example, the second optical transceiver option and the third optical transceiver option correspond to the optical path loss class C+; and one of the second optical transceiver option and the third optical transceiver option is the optical transceiver option C+, and the other is the optical transceiver option C+b.

Specifically, the ONU obtains the grant time indicated by the downstream frame, and the ONU sends the upstream frame to the OLT in a time window corresponding to the grant time. The upstream frame is used to request to register with the OLT. In addition, in this embodiment, the upstream frame further carries second indication information, and the second indication information indicates the second optical transceiver option and the third optical transceiver option.

Optionally, in this embodiment, the ONU may send the upstream frame when at least one of the second optical transceiver option and the third optical transceiver option matches one of the first optical transceiver option and the fourth optical transceiver option. For descriptions of matching between two different optical transceiver options, refer to step 303 corresponding to FIG. 3a. Details are not described again.

Optionally, the ONU may not determine whether the optical transceiver option corresponding to the first optical transceiver matches the optical transceiver option corresponding to the second optical transceiver, but directly send the upstream frame to the OLT, to report the optical transceiver options corresponding to the second optical transceiver of the ONU. When the upstream frame sent by the ONU shown in step 602 is a Serial_Number_ONU message for a registration request, the OLT performs step 603.

Step 603: The OLT sends an activation message to the ONU.

When the OLT receives the upstream frame from the ONU, the OLT assigns an ONU ID to the ONU, and creates a mapping relationship between an SN and the ONU ID. The OLT sends activation indication information and the ONU ID to the ONU, where the activation indication information indicates that the OLT successfully assigns the ONU ID to the ONU. The activation message in this embodiment further indicates a target optical transceiver option. The target optical transceiver option is one of the second optical transceiver option and the third optical transceiver option. To be specific, the OLT sends, to the ONU, the activation message indicating the target optical transceiver option, to indicate the ONU to specifically operate in the target optical transceiver option.

For example, if the first optical transceiver of the OLT in this embodiment supports the options C+ and C+b, the OLT learns, from the upstream frame, that the second optical transceiver of the ONU supports the options C+ and C+b. If the OLT determines that the first optical transceiver receives an upstream optical signal based on the option C+b, to ensure reliability of transmitting the upstream optical signal, the OLT expects that the target optical transceiver option in which the ONU operates is also C+b, to ensure that the optical transceiver option in which the first optical transceiver operates matches the optical transceiver option in which the second optical transceiver operates.

The activation message shown in this embodiment may be an Assign ONU_ID. For the Assign ONU_ID, refer to Table 9.

**Table 9**

| Byte | Byte name | Specific bits included in the byte |
|---|---|---|
| 15 | Operation indicator (operation indicator) | 00000TUU |

A target bit in the Assign ONU_ID message may indicate the target optical transceiver option. The target bit is a 6^{th} bit in an order of a most significant bit to a least significant bit in the 15^{th} byte in the Assign ONU_ID message, and indicates the target optical transceiver option. For example, if the OLT expects that the target optical transceiver option in which the ONU operates is N1 or C+, a value of the target bit T is 0. If the OLT expects that the target optical transceiver option in which the ONU operates is N1b or C+b, the value of the target bit T is 1. It should be noted that the descriptions of a case in which the OLT indicates the target transceiver option to the ONU in this embodiment is an optional example, and this is not limited. In another application scenario, the target optical transceiver option may be indicated by any type of message, any field, and any value.

Step 604: The ONU configures the second optical transceiver option as the target optical transceiver option.

In this embodiment, when receiving the activation message, the ONU may obtain the target optical transceiver option. For example, the target optical transceiver option is C+b. In this case, the ONU may determine that the OLT expects the ONU to operate in the target optical transceiver option C+b, to send an upstream optical signal to the OLT based on the target optical transceiver option C+b. Therefore, the ONU configures the second optical transceiver option as the target optical transceiver option C+b, so that the ONU can send the upstream optical signal to the OLT based on parameters indicated by the target optical transceiver option C+b. For descriptions of the target optical transceiver option C+b, refer to Table 6. Details are not described again.

According to the method shown in this embodiment, the OLT supports a plurality of optical transceiver options under a same link budget parameter, and the ONU also supports a plurality of optical transceiver options under a same link budget parameter. The OLT may directly indicate, via the activation message, an optical transceiver option in which the ONU operates, so that the ONU can determine, among the plurality of supported optical transceiver options, the specific optical transceiver option based on which the upstream optical signal is to be transmitted, thereby ensuring reliability of transmitting the upstream optical signal, and improving efficiency of configuring, by the OLT, an optical transceiver option in which the first optical transceiver operates and configuring, by the ONU, an optical transceiver option in which the second optical transceiver operates.

For the foregoing method embodiments, it should be noted that:
(1) The step numbers of each flowchart described in embodiments are merely a procedure execution example, and do not constitute a limitation on a step execution sequence. In embodiments of this application, there is no strict execution sequence between steps having no time sequence dependence relationship with each other. In addition, not all steps shown in each flowchart are necessarily performed steps, and some steps may be added or deleted for each flowchart based on an actual requirement.
(2) In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
(3) In the foregoing embodiments, some messages and parameters in a PON system are used in the descriptions. However, during specific implementation, different messages or message names may be used. This is not limited in embodiments of this application. In addition, in some of the foregoing embodiments, a device (an OLT or an ONU) in an existing PON network architecture is mainly used as an example for description. It should be understood that, a specific form of the device is not limited in embodiments of this application. For example, all devices that can implement a same function in the future are applicable to embodiments of this application.
(4) In the foregoing method embodiments, a method and an operation implemented by a device (for example, an OLT or an ONU) may alternatively be implemented by a component (for example, a chip or a circuit) of the device. This is not limited.

The method provided in embodiments of this application is described above in detail. The following describes in detail an apparatus and a chip system provided in embodiments of this application. It should be understood that descriptions of apparatus embodiments correspond to the descriptions of the method embodiments. Therefore, for content not described in detail, refer to the foregoing method embodiments. For brevity, details are not described herein again.

The foregoing communication method is mainly described from a perspective of interaction between the OLT and the ONU. It may be understood that, to implement the foregoing functions, the OLT and the ONU include corresponding hardware structures and/or software modules for performing the functions.

It may be understood that, to implement the functions in the foregoing embodiments, the OLT and the ONU include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 7 is a block diagram of an embodiment of a communication apparatus according to this application. Specifically, the communication apparatus 700 includes a sending module 701, a processing module 702, and a receiving module 703. The sending module 701 may also be referred to as a transmitter, a sending unit, a sending apparatus, or the like. The receiving module 703 may also be referred to as a receiver, a receiving unit, a receiving apparatus, or the like. The processing module 702 is configured to implement a corresponding processing function. The sending module 701 and the receiving module 703 may also be referred to as a communication interface or a communication unit.

Optionally, the communication apparatus 700 further includes a storage unit. The storage unit may be configured to store instructions and/or data. The processing module 702 may read the instructions and/or the data in the storage unit, to perform a corresponding processing control action.

For example, the communication apparatus may be the OLT shown in FIG. 1, or may be a module (for example, a chip) used in the OLT. For another example, the communication apparatus may be the primary device shown in FIG. 2, or may be a module (for example, a chip) used in the primary device. In this case, in the embodiment corresponding to FIG. 3a, the sending module 701 is configured to perform step 301 and step 303. The receiving module 703 is configured to perform step 302. In the embodiment corresponding to FIG. 3b, the sending module 701 is configured to perform step 311, step 313, step 315, and step 317. The receiving module 703 is configured to perform step 312, step 314, and step 316. In the embodiment corresponding to FIG. 6, the sending module 701 is configured to perform step 601 and step 603, and the receiving module 703 is configured to perform step 602.

For another example, the communication apparatus may be the ONU or the ONT shown in FIG. 1, or may be a module (for example, a chip) used in the ONU or the ONT. For still another example, the communication apparatus may be the secondary device shown in FIG. 2, or may be a module (for example, a chip) used in the secondary device. In this case, in the embodiment corresponding to FIG. 3a, the sending module 701 is configured to perform step 302. The receiving module 703 is configured to perform step 301 and step 303. In the embodiment corresponding to FIG. 3b, the sending module 701 is configured to perform step 312, step 314, and step 316. The receiving module 703 is configured to perform step 311, step 313, step 315, and step 317. In the embodiment corresponding to FIG. 6, the receiving module 703 is configured to receive step 601 to receive the downstream frame, and is configured to perform step 603 to receive the activation message. The sending module 701 is configured to perform step 602. The processing module 702 is configured to perform step 604.

It should be understood that a specific process in which the modules perform the foregoing corresponding steps is described in detail in the foregoing method embodiments. For brevity, details are not described herein again.

Optionally, the communication apparatus 700 may be a device including an OLT, or a component configured in the OLT, for example, a chip of the OLT. In this case, the receiving module 703 and the sending module 701 may be an interface circuit, a pin, or the like. Specifically, the interface circuit may include an input circuit and an output circuit. The receiving module 703 may include the input circuit, the sending module 701 may include the output circuit, and the processing module 702 may include a processing circuit.

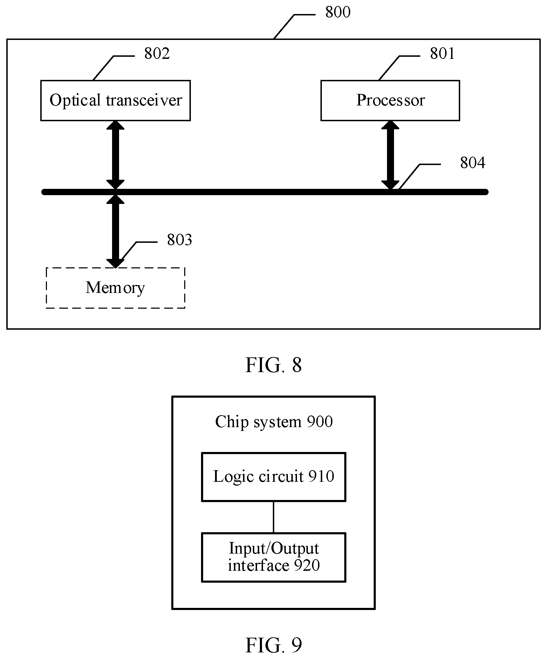

FIG. 8 is a block diagram of another embodiment of a communication apparatus according to this application. The communication apparatus 800 includes a processor 801 and an optical transceiver 802. The optical transceiver 802 is configured to perform photoelectric conversion, to exchange data with the processor 801. The optical transceiver 802 is further configured to receive and transmit an optical signal with another communication apparatus. Optionally, the optical transceiver 802 may be an interface, a bus, a circuit, or an apparatus that can implement receiving and sending functions. For descriptions of the optical transceiver 802, refer to the descriptions corresponding to FIG. 1. Details are not described again. Optionally, a component that is in the optical transceiver 802 and that is configured to implement a receiving function may be considered as a receiving module, and a component that is in the optical transceiver 802 and that is configured to implement a sending function may be considered as a sending module. In other words, the optical transceiver 802 includes a receiver and a transmitter.

For example, in an embodiment, the processor 801 is configured to perform other operations or functions of a chip of an OLT. The optical transceiver 802 is configured to exchange information between the communication apparatus 800 and an ONU.

In another embodiment, the processor 801 is configured to perform other operations or functions of a chip of the ONU. The optical transceiver 802 is configured to exchange information between the communication apparatus 800 and the OLT.

The communication apparatus 800 may further include a memory 803, configured to store a computer program or instructions and/or data. The memory 803 is coupled to the processor 801. The processor 801 is configured to execute the computer program or the instructions and/or the data stored in the memory 803, so that the method in the foregoing method embodiments is performed. The coupling in embodiments of this application is an indirect coupling or communication connection between apparatuses, units, or modules; may be an electrical, mechanical, or another form; and is used for information exchange between apparatuses, units, or modules. The processor 801 and the memory 803 may operate cooperatively. The memory 803 shown in this embodiment is an optional component.

Optionally, the communication apparatus 800 may include one or more processors 801, and one or more memories 803.

Optionally, the memory 803 and the processor 801 are integrated together, or disposed separately.

In this embodiment of this application, a specific connection medium among the processor 801, the optical transceiver 802, and the memory 803 is not limited. In this embodiment of this application, the processor 801, the optical transceiver 802, and the memory 803 are connected through a bus 804 in FIG. 8. The bus is represented by a bold line in FIG. 8. A connection manner between other components is merely an example for description, and imposes no limitation. The bus may be classified into an address bus, a data bus, a control bus, and the like.

It should be understood that for ease of representation, only one bold line is used to represent the bus in FIG. 8, but this does not mean that there is only one bus or only one type of bus.

FIG. 9 is a diagram of an embodiment of a chip system according to this application. The chip system 900 (also referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

Optionally, the logic circuit 910 may be implemented by one or more processors, including the one or more processors or a processing part of the one or more processors.

Optionally, the input/output interface 920 may include a transceiver circuit, a transceiver, an input/output circuit, or a communication interface.

In a solution, the chip system 900 is configured to implement operations performed by the OLT or the ONU in the foregoing method embodiments.

Specifically, the logic circuit 910 is configured to implement processing related operations performed by the OLT or the ONU in the foregoing method embodiments, and the input/output interface 920 is configured to implement sending and/or receiving related operations performed by the OLT or the ONU in the foregoing method embodiments.

An embodiment of this application further provides a computer-readable storage medium, storing computer instructions for implementing the method performed by the OLT or the ONU in the foregoing method embodiments.

For example, when the computer instructions are executed by a computer, the computer is enabled to implement the method performed by the OLT or the ONU in the foregoing method embodiments.

An embodiment of this application further provides a computer program product, including instructions. When the instructions are executed by a computer, the method performed by the OLT or the ONU in the foregoing method embodiments is implemented.

An embodiment of this application further provides a PON system. The communication system includes the ONU and/or the OLT in the foregoing embodiments. For example, the system includes the ONU and the OLT in FIG. 1. For another example, the communication system includes the primary device and/or the secondary device shown in FIG. 2.

For explanations and beneficial effects of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, a fiber, or a digital subscriber line (DSL)) or wireless (for example, infrared, radio, microwave, or the like) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by an optical network terminal device, a downstream frame from an optical network central office device, wherein the downstream frame carries first indication information, the first indication information indicates a first optical transceiver option, and the first optical transceiver option indicates performance of a first optical transceiver comprised in the optical network central office device; and
sending, by the optical network terminal device, an upstream frame to the optical network central office device, wherein the upstream frame carries a device identifier of the optical network terminal device and second indication information, the second indication information indicates a second optical transceiver option, and the second optical transceiver option indicates performance of a second optical transceiver comprised in the optical network terminal device.

2. The method according to claim 1, wherein the second optical transceiver option matches the first optical transceiver option.

3. The method according to claim 1 or 2, wherein an optical transceiver option configured for the second optical transceiver is a fifth optical transceiver option, the first optical transceiver option does not match the fifth optical transceiver option, and after the receiving, by an optical network terminal device, a downstream frame from an optical network central office device, the method further comprises:
changing, by the optical network terminal device, the fifth optical transceiver option to the second optical transceiver option, wherein the first optical transceiver option matches the second optical transceiver option.

4. The method according to claim 1, wherein the first optical transceiver option does not match the second optical transceiver option.

5. The method according to claim 4, wherein the upstream frame further carries information indicating that the first optical transceiver option does not match the second optical transceiver option.

6. The method according to any one of claims 1 to 3, wherein that the first optical transceiver option matches the second optical transceiver option means that the first optical transceiver option is an optical transceiver option N1 and the second optical transceiver option is the optical transceiver option N1 and/or an optical transceiver option N1b, or the first optical transceiver option and the second optical transceiver option are both the optical transceiver option N1b.

7. The method according to claim 6, wherein if the second optical transceiver option is the optical transceiver option N1, a mean launch power minimum to which the optical transceiver option N1 is mapped is 6.8 decibel-milliwatts (dBm), a mean launch power maximum to which the optical transceiver option N1 is mapped is 11.8 dBm, and a target parameter to which the optical transceiver option N1 is mapped is 4.47 dBm, wherein the target parameter is a launch optical power represented by OMA-TDEC (optical modulation amplitude, OMA, transmitter and dispersion eye closure, TDEC); or
if the second optical transceiver option is the optical transceiver option N1b, a mean launch power minimum to which the optical transceiver option N1b is mapped is 7.8 dBm, a mean launch power maximum to which the optical transceiver option N1b is mapped is 11.8 dBm, and a target parameter to which the optical transceiver option N1b is mapped is 5.47 dBm.

8. The method according to claim 6 or 7, wherein if the first optical transceiver option is the optical transceiver option N1, sensitivity at a bit error ratio reference level to which the optical transceiver option N1 is mapped is -22.7 dBm, optical modulation amplitude sensitivity at the bit error ratio reference level to which the optical transceiver option N1 is mapped is -22.53 dBm, and an overload at the bit error ratio reference level to which the optical transceiver option N1 is mapped is -2.2 dBm; or
if the first optical transceiver option is the optical transceiver option N1b, sensitivity at the bit error ratio reference level to which the optical transceiver option N1b is mapped is -21.7 dBm, optical modulation amplitude sensitivity at the bit error ratio reference level to which the optical transceiver option N1b is mapped is -21.53 dBm, and an overload at the bit error ratio reference level to which the optical transceiver option N1b is mapped is -2.2 dBm.

9. The method according to any one of claims 1 to 3, wherein that the first optical transceiver option matches the second optical transceiver option means that the first optical transceiver option is an optical transceiver option C+ and the second optical transceiver option is the optical transceiver option C+ and/or an optical transceiver option C+b, or the first optical transceiver option and the second optical transceiver option are both the optical transceiver option C+b.

10. The method according to claim 9, wherein if the second optical transceiver option is the optical transceiver option C+, a mean launch power minimum to which the optical transceiver option C+ is mapped is 6.8 dBm, a mean launch power maximum to which the optical transceiver option C+ is mapped is 11.8 dBm, and a target parameter to which the optical transceiver option C+ is mapped is 4.47 dBm, wherein the target parameter is a launch optical power represented by OMA-TDEC (optical modulation amplitude, OMA, transmitter and dispersion eye closure, TDEC); or
if the second optical transceiver option is the optical transceiver option C+b, a mean launch power minimum to which the optical transceiver option C+b is mapped is 7.8 dBm, a mean launch power maximum to which the optical transceiver option C+b is mapped is 11.8 dBm, and the target parameter to which the optical transceiver option C+b is mapped is 5.47 dBm.

11. The method according to claim 9 or 10, wherein if the first optical transceiver option is the optical transceiver option C+, sensitivity at a bit error ratio reference level to which the optical transceiver option C+ is mapped is -25.7 dBm, optical modulation amplitude sensitivity at the bit error ratio reference level to which the optical transceiver option C+ is mapped is -25.53 dBm, and an overload at the bit error ratio reference level to which the optical transceiver option C+ is mapped is -5.2 dBm; or
if the first optical transceiver option is the optical transceiver option C+b, sensitivity at the bit error ratio reference level to which the optical transceiver option C+b is mapped is -24.7 dBm, optical modulation amplitude sensitivity at the bit error ratio reference level to which the optical transceiver option C+b is mapped is -24.53 dBm, and an overload at the bit error ratio reference level to which the optical transceiver option C+b is mapped is -5.2 dBm.

12. The method according to any one of claims 1 to 10, wherein a serial number Serial_Number message comprised in the upstream frame is used to carry the second indication information; and if a value of the second indication information is a first value, the second indication information indicates that the second optical transceiver option is the optical transceiver option N1 or C+; or if the value of the second indication information is a second value, the second indication information indicates that the second optical transceiver option is the optical transceiver option N1b or C+b.

13. The method according to claim 12, wherein the second indication information is a 5^{th} bit or a 6^{th} bit in an order of a most significant bit to a least significant bit in a 40^{th} byte in the Serial_Number message, the first value is 0, and the second value is 1.

14. The method according to any one of claims 1 to 3, wherein the second indication information further indicates a third optical transceiver option, the third optical transceiver option indicates the performance of the second optical transceiver, the second optical transceiver option is different from the third optical transceiver option, the second optical transceiver option and the third optical transceiver option correspond to a same optical path loss class, and after the sending, by the optical network terminal device, an upstream frame to the optical network central office device, the method further comprises:
receiving, by the optical network terminal, an activation message from the optical network central office device, wherein the activation message indicates one of the second optical transceiver option and the third optical transceiver option.

15. The method according to claim 14, wherein the activation message is an assign optical network terminal device identifier Assign ONU_ID message; the Assign ONU_ID message carries a target bit; the target bit is a 6^{th} bit in an order of a most significant bit to a least significant bit in a 15^{th} byte in the Assign ONU_ID message; and if a value of the target bit is 0, the target bit indicates that the optical transceiver option is N1 or C+; or if the value of the target bit is 1, the target bit indicates that the optical transceiver option is N1b or C+b.

16. The method according to any one of claims 1 to 15, wherein the device identifier of the optical network terminal device is a serial number.

17. A communication method, wherein the method comprises:
sending, by an optical network central office device, a downstream frame to an optical network terminal device, wherein the downstream frame carries first indication information, the first indication information indicates a first optical transceiver option, and the first optical transceiver option indicates performance of a first optical transceiver comprised in the optical network central office device; and
receiving, by the optical network central office device, an upstream frame from the optical network terminal device, wherein the upstream frame carries a device identifier of the optical network terminal device and second indication information, the second indication information indicates a second optical transceiver option, and the second optical transceiver option indicates performance of a second optical transceiver comprised in the optical network terminal device.

18. The method according to claim 17, wherein an optical distribution network class (ODN class) field comprised in the downstream frame is used to carry the first indication information; and when a value of the first indication information is a third value, the first indication information indicates that the first optical transceiver option is N1; when the value of the first indication information is a fourth value, the first indication information indicates that the first optical transceiver option is N1b; when the value of the first indication information is a fifth value, the first indication information indicates that the first optical transceiver option is C+; or when the value of the first indication information is a sixth value, the first indication information indicates that the first optical transceiver option is C+b.

19. The method according to claim 18, wherein the third value is 000, the fourth value is 101, the fifth value is 100, and the sixth value is 110.

20. The method according to claim 17, wherein a burst profile message comprised in the downstream frame is used to carry the first indication information; and the first indication information indicates that the first optical transceiver option is N1 or N1b, or the first indication information indicates that the first optical transceiver option is C+ or C+b.

21. The method according to claim 20, wherein when a value of the first indication information is 0, the first indication information indicates the optical transceiver option N1 or C+; or when the value of the first indication information is 1, the first indication information indicates the optical transceiver option N1b or C+b, wherein the first indication information is a 4^{th} bit in an order of a most significant bit to a least significant bit in a 5th byte in the burst profile message, or the first indication information is a 5^{th} or 6^{th} bit in an order of a most significant bit to a least significant bit in a 6th byte in the burst profile message.

22. The method according to any one of claims 17 to 21, wherein the first indication information further indicates a fourth optical transceiver option, the fourth optical transceiver option indicates the performance of the first optical transceiver, the first optical transceiver option is different from the fourth optical transceiver option, and the first optical transceiver option and the fourth optical transceiver option correspond to a same optical path loss class.

23. The method according to any one of claims 17 to 22, wherein the second indication information further indicates a third optical transceiver option, the third optical transceiver option indicates the performance of the second optical transceiver, the second optical transceiver option is different from the third optical transceiver option, the second optical transceiver option and the third optical transceiver option correspond to a same optical path loss class, and after the receiving, by the optical network central office device, an upstream frame from the optical network terminal device, the method further comprises:
sending, by the optical network central office device, an activation message to the optical network terminal device, wherein the activation message indicates one of the second optical transceiver option and the third optical transceiver option.

24. A communication apparatus, comprising an optical transceiver and a processor, wherein the optical transceiver is configured to receive and transmit an optical signal, and the processor is configured to perform the method according to any one of claims 1 to 16 or the processor is configured to perform the method according to any one of claims 17 to 23.

25. A communication apparatus, comprising a module configured to perform the method according to any one of claims 1 to 16 or a module configured to perform the method according to any one of claims 17 to 23.

26. A chip, wherein the chip comprises a processor and a communication interface, the communication interface is configured to receive data and transmit the data to the processor, or send data from the processor to another chip, and the processor is configured to perform the method according to any one of claims 1 to 16 or the method according to any one of claims 17 to 23.

27. A computer-readable storage medium, comprising computer program instructions, wherein when the computer program instructions are executed by a processor, the processor performs the method according to any one of claims 1 to 23.
